# EUROPEAN PATENT SPECIFICATION

(11) **EP 1 156 461 B1**
(45) Date of publication and mention of the grant of the patent: **31.05.2006**
(21) Application number: 01105305.5
(22) Date of filing: 06.03.2001
(51) Int. Cl.: G08G 1/0962, G01S 5/14, G01C 21/36

(54) **Vehicle-mounted positional information indication system**
In ein Farhzeug eingebaute Vorrichtung zur Positionsanweisung
Système d'indication de la position embarqué dans un véhicule

(30) Priority: 17.03.2000 JP 2000075197
(43) Date of publication of application: 21.11.2001
(73) Proprietor: Data Tron Co., Ltd, Tamura-gun, Fukushima 963-4600 (JP)
(72) Inventor: Hosokai, Takeo, Niigata 940-0046 (JP)
(74) Representative: Vossius & Partner

(56) References cited:
- EP-A- 0 940 654
- DE-A- 19 935 718
- US-A- 5 177 685
- US-A- 5 925 090
- US-A- 6 084 543
- PATENT ABSTRACTS OF JAPAN vol. 2000, no. 03, 30 March 2000 (2000-03-30) -& JP 11 337359 A (FUJITSU TEN LTD), 10 December 1999 (1999-12-10)
- KIRSON A M: "A COMPACT DRIVER INTERFACE FOR NAVIGATION AND ROUTE GUIDANCE" PACIFIC RIM TRANSTECH CONFERENCE. VEHICLE NAVIGATION AND INFORMATION SYSTEMS CONFERENCE PROCEEDINGS. WASHINGTON, JULY 30 - AUG. 2, 1995, NEW YORK, IEEE, US, vol. CONF. 6, 30 July 1995 (1995-07-30), pages 61-66, XP000641135 ISBN: 0-7803-2588-5

## Description

The present invention relates to a positional information indication system mounted on a vehicle for allowing an occupant to accurately check the information indicated by marker posts and road signs on the ground to conduct the position control of the vehicle.

Conventionally, marker posts indicating positional information such as distances from a starting point of a highway and road signs indicating information such as destinations of ways at branch points are disposed on median strips and above lanes of the highway. Each driver of general vehicles sees the information indicated by the marker posts and the road signs directly with his or her eyes or through a camera to check the subject vehicle's position and to take actions for changing the lane near a branch point for his or her destination and the like. An operator such as a driver on a working vehicle for administrative inspection and/or road improvements not only checks the vehicle's position and steers the vehicle to the destination but also controls the operation, including the labor time and the operation process, for maintenance of the highway.

Marker posts indicating positional information such as bus stops and locations including street name and lot number and road signs are disposed on streets, each driver catches the information indicated by the marker posts and the road signs in the same manner as mentioned above.

Recently, it is commonplace to mount a car navigation system on a vehicle such as an automobile. By this car navigation system, electronic map is displayed on an electronic display and a subject vehicle is indicated on the electronic map, whereby a driver can check the position of the subject vehicle.

US 5, 925,090 discloses a vehicle navigation system and method for storing and displaying sign text data corresponding to road signs having route guidance information. The navigation system of US 5, 925,090 is design to provide a more concise route guidance when a driver is confronted with multiple road signs at a particular road segment. When there are multiple signs in a sequence and each sign is associated with a decision point at which the driver must decide which direction to take, a comparison is made between the content (the text of the road sign) of the first sign and the last sign in the sequence. In order to provide a more simplified display for the driver, only the content of the last sign is displayed at the point of the first sign if any words or phrases coincide in the signs.

In case where the vehicle's position is checked by seeing the marker posts and the road signs directly with eyes or through a camera, according to the weather condition, the driving condition, and/or the travelling condition, it is sometimes difficult to recognize the information indicated on the marker posts and the road signs and even to recognize the existence of the marker posts and the road signs. Therefore, it is difficult to accurately conduct the operational control for the maintenance of roads. To know the information on the marker posts and the road signs without fail, it is required to increase the number of operators.

In case where the vehicle's position is checked by the car navigation system, since the car navigation system just indicates the vehicle's position on the map and does not handle marker posts and road signs indicating the distance from the starting point to the subject vehicle and the distance from the subject vehicle to the destination, occupants on the vehicle can not check such information. Therefore, the marker posts and the road signs can not be checked by using the car navigation system, it is difficult to accurately conduct the operational control for the maintenance of roads.

It is an object of the present invention to provide a vehicle-mounted positional information indication system which allows an occupant on the vehicle to further accurately know information indicated by marker posts and road signs, including ones utilized as information for road maintenance used by administrators in charge of road maintenance

It is another object of the present invention to provide a vehicle-mounted positional information indication system which can improve the accuracy of and save labor for the position control and the operational control according to the position control and also improve the safety during the driving.

To achieve the aforementioned objects, the present invention is achieved with the features of the claims. A positional information indication system is mounted on a vehicle for running on the ground and of which position should be recognized, and that the positional information indication system comprises: a GPS device for detecting the position of the vehicle; a database in which information of marker posts or road signs on the ground is previously stored; a control unit which picks up information of a corresponding our nearest marker post or road sign from said database based on the information of the detected position from said GPS device; and an output device for indicating the information of the marker post or road sign picked-up by and transmitted from said control unit.

The present invention is characterized by further comprising: an output port for outputting the information of the marker post or road sign picked-up by and transmitted from said control unit; and at least one of a communicating device which is connected to said output port to transmit the information of the marker post or road sign transmitted to said output port to a remote location and a recording device which is connected to said output port to record said information.

The present invention is further characterized in that said vehicle is a working vehicle for performing actions for the maintenance of roads, a transport vehicle running on a road for transporting objects, or a train for railroad service.

According to the positional information indication system of the present invention structured as mentioned above, information of marker posts and road signs can be checked based on the latitude and longitude position coordinates of the present position of the working vehicle detected by the GPS device. Therefore, even when it is difficult to recognize the existence of the marker post or road sign with the occupant's eyes or through a camera due to the weather condition, the driving condition, and/or the traveling condition, the occupant can accurately check the information of the marker post or road sign.

Since the occupant can concentrate his or her attention on the driving operation in case that the marker post or road sign is checked through the output device mounted on the working vehicle as compared to the case that the stationary marker post or road sign is checked directly with his or her eyes or through a camera from the moving vehicle, thereby improving the safety during driving.

Since the data of information of the marker posts and road signs are processed digitally, information of the marker posts and road signs can be accurately and quickly checked.

Since the information of the marker posts and road signs can be accurately and quickly checked, when the positional information indication system of the present invention is applied to a working vehicle for road maintenance, a transport vehicle for transportation, or a train of railroad service, the operational control for the road maintenance, the operational control for the transportation, or the operational control for the railroad service can be further accurately conducted with a reduced number of operators, thereby effectively saving labor for operational control and also improving the safety during the driving of the vehicles.

Still other objects and advantages of the invention will in part be obvious and will in part be apparent from the specification.

The invention accordingly comprises the features of construction, combinations of elements, and arrangement of parts which will be exemplified in the construction hereinafter set forth, and the scope of the invention will be indicated in the claims.

Hereinafter, an embodiment of the present invention will now be described with reference to the drawing.

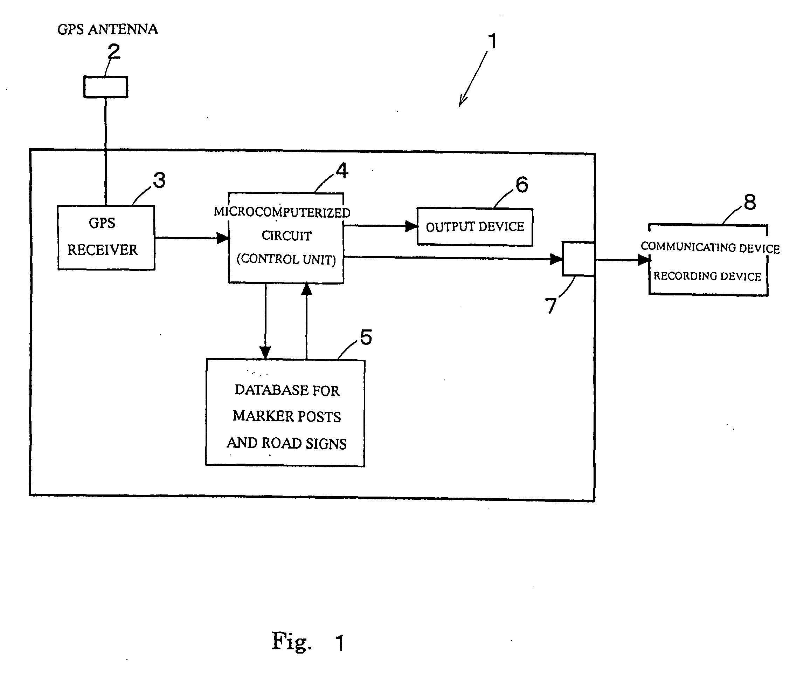

Fig. 1 is a block diagram schematically showing a vehicle-mounted positional information indication system according to the present invention.

As shown in Fig. 1, the vehicle-mounted positional information indication system 1 of this embodiment comprises a GPS (global positioning system) device including a GPS receiver 3 with a GPS antenna 2 receiving signals from GPS satellites (not shown), a microcomputerized circuit 4 as a control unit of the present invention, a database 5 for marker posts and road signs, an output device 6, an external port 7, and a communicating or recording device 8. The positional information indication system 1 is mounted on a vehicle, for example, a working vehicle used for operation relating to the maintenance of roads.

The GPS receiver 3 receives signals from the GPS satellites through the GPS antenna 2 to compute the latitude and longitude position coordinates of the present position of the working vehicle on which the positional information indication system 1 is mounted, and transmits the computed data of the latitude and longitude position coordinates of the present position of the working vehicle to the microcomputerized circuit 4.

Previously stored in the database 5 are information of marker posts and road signs set on all roads within a subject area of maintenance and latitude and longitude position coordinates indicating positional coordinates of the marker posts and the road signs.

The microcomputerized circuit 4 scans the database 5 to pick up information of and latitude and longitude position coordinates indicating the position of a marker post or road sign corresponding to the latitude and longitude position coordinates of the present position of the working vehicle transmitted from the GPS receiver 3. When there is no information of and no latitude and longitude position coordinates of a corresponding marker post or road sign in the database 5, the microcomputerized circuit 4 picks up the information of and the latitude and longitude position coordinates of the nearest marker post or road sign as the information of and the latitude and longitude position coordinates of the corresponding marker post. Then, the microcomputerized circuit 4 transmits the information of and the latitude and longitude position coordinates of the corresponding marker post or road sign to the output device 6 and the external port 7.

The output device 6 comprises a visual indicator, for example a digital display or a graphic display, for visually indicating the information of and the latitude and longitude position coordinates of the marker post or road sign to an occupant of the working vehicle, and an acoustic indicator for acoustically indicating the information to the occupant with notifying sound from an arbitrary sound source, electronic composite sound (also called as "electronic synthesized sound"), or the like.

The external port 7 transmits the information of and the latitude and longitude position coordinates of the marker post or road sign transmitted from the microcomputerized circuit 4 to the communicating or recording device 8 connected to the outside. When a communicating device such as a cellular phone and a wireless telephone is connected to the external port 7, the information of and the latitude and longitude position coordinates of the marker post or road sign can be transmitted to a remote location. When a recording device such as a magnetic recording medium, a memory card, and a paper recorder is connected to the external port 7, the information of the marker post or road sign can be recorded.

In the positional information indication system 1, data of information are processed digitally.

According to the positional information indication system 1, information of marker posts and road signs can be checked based on the latitude and longitude position coordinates of the present position of the working vehicle detected by the GPS device. Therefore, even when it is difficult to recognize the existence of the marker post or road sign with the occupant's eyes or through a camera due to the weather condition, the driving condition, and/or the traveling condition, the occupant can accurately check the information of the marker post or road sign.

Since the occupant can concentrate his or her attention on the driving operation in case that the marker post or road sign is checked through the output device mounted on the working vehicle as compared to the case that the stationary marker post or road sign is checked directly with his or her eyes or through a camera from the moving vehicle, thereby improving the safety during driving.

Since the data of information of the marker posts and road signs are processed digitally, information of the marker posts and road signs can be accurately and quickly checked.

Though the positional information indication system is applied to the working vehicle in the above embodiment, the present invention is not limited thereto and can be applied to various types of vehicles. For example, when the positional information indication system 1 of the present invention is applied to a transport vehicle for transportation using roads, a driver or occupant can accurately check information of the marker posts and road signs and the position control of the transport vehicle can be accurately conducted.

By preparing a database of the system of units (e.g. the degree of traveling kilo-meters) for the position control of trains in railroad service, the position control, for example, verifying the positions of the trains can be easily conducted.

Further, the positional information indication system of the present invention is not limited to the application to such a working vehicle for road maintenance, a transport vehicle, and a train and can be applied to any system of which purpose is position control or operational control conducted by the position control wherein the positions of the marker posts and road signs are processed as digital data to check marker posts and road signs on the ground.

As apparent from the aforementioned description, since information of marker posts and road signs is indicated by using a GPS device according to the positional information indication system of the present invention, an occupant can accurately check the information of the marker posts and road signs even when it is difficult to recognize the existence of the marker post or road sign with the occupant's eyes or through a camera due to the weather condition, the driving condition, and/or the traveling condition.

Since the occupant can concentrate his or her attention on the steering operation in case that a marker post or road sign is checked through an output device mounted on the working vehicle as compared to the case that the stationary marker post or road sign is checked directly with his or her eyes or through a camera from a moving vehicle, thereby improving the safety during driving.

Since the data of information of the marker posts and road signs are processed digitally, information of the marker posts and road signs can be accurately and quickly checked.

Since the information of the marker posts and road signs can be accurately and quickly checked, when the positional information indication system of the present invention is applied to a working vehicle for road maintenance, a transport vehicle for transportation, or a train of railroad service, the operational control for the road maintenance, the operational control for the transportation, or the operational control for the railroad service can be further accurately conducted with a reduced number of operators, thereby effectively saving labor for operational control and also improving the safety during the driving of the vehicles.

## Claims

1. A positional information indication system (1) which is mounted on a vehicle for running on the ground and of which position should be recognized, said positional information indication system (1) comprising:
a GPS device for detecting the position of the vehicle;
a database (5) in which information of marker posts or road signs on the ground for operational control of the maintenance work of roads is previously stored;
a control unit (4) which picks up information of a corresponding or nearest marker post or road sign from said database (5) based on the information of the detected position from said GPS device; and
an output device (6) for indicating the information of the marker post or road sign picked-up by and transmitted from said control unit (4), wherein said operational control of the maintenance work of roads is conducted on the basis of information displayed by said output device.

2. A positional information indication system as claimed in claim 1, further comprising: an output port (7) for outputting the information of the marker post or road sign picked-up by and transmitted from said control unit (4); and at least one of a communicating device which is connected to said output port (7) to transmit the information of the marker post or road sign transmitted to said output port (7) to a remote location and a recording device which is connected to said output port (7) to record said information

3. A positional information indication system as claimed in claim 1 or 2, wherein said vehicle is a working vehicle for performing actions for the maintenance of roads, a transport vehicle running on a road for transporting objects, or a train for railroad service.

## Patentansprüche

1. Positionsinformationsanzeigesystem (1), das in einem Fahrzeug montiert ist, das auf dem Boden fährt und dessen Position erfaßt werden soll, wobei das Positionsinformationsanzeigesystem (1) aufweist:
eine GPS-Vorrichtung zum Erfassen der Position des Fahrzeugs;
eine Datenbank (5), in der Information von am Boden installierten Strecken- bzw. Leitpfosten oder Straßenschildern zum Steuern eines Arbeitsablaufs der Instandhaltung von Straßen vorgespeichert ist;
eine Steuereinheit (4), die Information eines entsprechenden oder nähesten Strecken- bzw. Leitpfostens oder Verkehrsschildes basierend auf der Information der durch die GPS-Vorrichtung erfaßten Position von der Datenbank (5) abruft; und
eine Ausgabevorrichtung (6) zum Anzeigen der durch die Steuereinheit (4) abgerufenen und übertragenen Information des Strecken- bzw. Leitpfostens oder Verkehrsschildes;
wobei die Steuerung des Arbeitsablaufs der Instandhaltung von Straßen auf der Basis von durch die Ausgabevorrichtung dargestellter Information ausgeführt wird.

2. Positionsinformationsanzeigesystem nach Anspruch 1, ferner mit:
einem Ausgabeport (7) zum Ausgeben der durch die Steuereinheit (4) abgerufenen übertragenen Information des Strecken- bzw. Leitpfostens oder Verkehrsschildes; und
einer Kommunikationsvorrichtung, die mit dem Ausgabeport (7) verbunden ist, um die an den Ausgabeport (7) übertragene Information des Strecken- bzw. Leitpfostens oder Verkehrsschildes an einen entfernten Ort zu übertragen, und/oder eine mit dem Ausgabeport (7) verbundene Aufzeichnungsvorrichtung zum Aufzeichnen der Information.

3. Positionsinformationsanzeigesystem nach Anspruch 1 oder 2, wobei das Fahrzeug ein Arbeitsfahrzeug zum Ausführen eines Arbeitsablaufs zum Instandhalten von Straßen, ein auf einer Straße fahrendes Transportfahrzeug zum Transportieren von Gegenständen oder ein Zug zum Instandhalten von Bahnstrecken oder Schienen ist.

## Revendications

1. Système d'indication d'information de position (1) qui est monté sur un véhicule pour se déplacer au sol et dont la position doit être reconnue, ledit système d'indication de la position (1) comprenant : un dispositif GPS pour détecter la position du véhicule ; une base de données (5) dans laquelle les informations de poteaux de marquage ou de panneaux de signalisation routière au sol pour un contrôle opérationnel des travaux d'entretien des routes sont préalablement enregistrées ; une unité de contrôle (4) qui récupère les informations d'un poteau de marquage ou d'un panneau de signalisation routière correspondant ou le plus proche dans ladite base de données (5) sur la base des informations de la position détectée par ledit dispositif GPS ; et un dispositif de sortie (6) qui indique les informations du poteau de marquage ou du panneau de signalisation routière récupérées et transmises par ladite unité de contrôle (4), dans lequel ledit contrôle opérationnel des travaux d'entretien des routes est réalisé sur la base des informations affichées par ledit dispositif de sortie.

2. Système d'indication d'informations de position selon la revendication 1, qui comprend également : un port de sortie (7) pour émettre les informations du poteau de marquage ou du panneau de signalisation routière récupérées et transmises par ladite unité de contrôle (4) ; et un dispositif de communication qui est relié au dit port de sortie (7) pour transmettre les informations du poteau de marquage ou du panneau de signalisation routière transmises au dit port de sortie (7) à un site distant et/ou un dispositif d'enregistrement qui est relié au dit port de sortie (7) pour enregistrer lesdites informations.

3. Système d'indication d'informations de position selon la revendication 1 ou 2, dans lequel ledit véhicule est un véhicule de travail pour exécuter des actions d'entretien des routes, un véhicule de transport qui se déplace sur une route pour transporter des objets, ou un train pour un service ferroviaire.
